# EUROPÄISCHE PATENTSCHRIFT

(11) **EP 3 185 053 B1**
(45) Veröffentlichungstag und Bekanntmachung des Hinweises auf die Patenterteilung: **26.02.2020**
(21) Anmeldenummer: 15201600.2
(22) Anmeldetag: 21.12.2015
(51) Int. Cl.: G02B 5/18, G02B 26/04, G02F 1/19, G02F 1/225

(54) **OPTISCHER MODULATOR**
OPTICAL MODULATOR
MODULATEUR OPTIQUE

(43) Veröffentlichungstag der Anmeldung: 28.06.2017
(73) Patentinhaber: SICK AG, 79183 Waldkirch (DE)
(72) Erfinder: Blöhbaum, Frank, 79312 Emmendingen (DE)
(74) Vertreter: Manitz Finsterwald Patent- und Rechtsanwaltspartnerschaft mbB

(56) Entgegenhaltungen:
- EP-A1- 1 795 955
- EP-A1- 2 790 034
- US-A1- 2004 071 180
- KROKER STEFANIE ET AL: "High efficiency two-dimensional grating reflectors with angularly tunable polarization efficiency", APPLIED PHYSICS LETTERS, A I P PUBLISHING LLC, US, Bd. 102, Nr. 16, 22. April 2013 (2013-04-22), Seiten 161111-161111, XP012172607, ISSN: 0003-6951, DOI: 10.1063/1.4802883 [gefunden am 2013-04-25]
- STEFAN STEINER ET AL: "Angular bandpass filters based on dielectric resonant waveguide gratings", OPTICS EXPRESS, Bd. 20, Nr. 20, 17. Februar 2012 (2012-02-17), Seiten 22555-22562, XP055102923,
- Stefanie Kroker ET AL: "Reflective cavity couplers based on resonant waveguide gratings", Optics Express, 11. August 2011 (2011-08-11), Seiten 16466-16479, XP055279010, Gefunden im Internet: URL:https://www.osapublishing.org/DirectPD FAccess/052792A0-F02E-9447-10F4EF7E39612D7 F_221788/oe-19-17-16466.pdf?da=1&id=221788 &seq=0&mobile=no [gefunden am 2016-06-09]
- D. HEINERT ET AL: "Calculation of thermal noise in grating reflectors", PHYSICAL REVIEW D, Bd. 88, Nr. 4, 1. August 2013 (2013-08-01) , Seiten 1-17, XP055279014, ISSN: 1550-7998, DOI: 10.1103/PhysRevD.88.042001
- FRANK BR\UCKNER ET AL: "Realization of a monolithic high-reflectivity cavity mirror from a single silicon crystal", ARXIV.ORG, CORNELL UNIVERSITY LIBRARY, 201 OLIN LIBRARY CORNELL UNIVERSITY ITHACA, NY 14853, 14. April 2010 (2010-04-14), XP080446010,
- JIA-SHENG YE ET AL: "Narrow-band tunable optical filters using the self-suspended subwavelength grating", JOURNAL OF MODERN OPTICS, Bd. 54, Nr. 6, 12. März 2007 (2007-03-12), Seiten 827-832, XP055279081, LONDON, GB ISSN: 0950-0340, DOI: 10.1080/09500340601066042
- Tsvi Katchalski ET AL: "Light modulation with electro-optic polymer-based resonant grating waveguide structures", Optics Express, 13. Juni 2005 (2005-06-13), Seiten 4645-4650, XP055279092, Gefunden im Internet: URL:https://www.osapublishing.org/DirectPD FAccess/0A73BAEB-908F-A31A-AD64643C9D4A078 2_84343/oe-13-12-4645.pdf?da=1&id=84343&se q=0&mobile=no [gefunden am 2016-06-09]
- DAVID ROSENBLATT ET AL: "Resonant Grating Waveguide Structures", IEEE JOURNAL OF QUANTUM ELECTRONICS, IEEE SERVICE CENTER, PISCATAWAY, NJ, USA, Bd. 33, Nr. 11, 1. November 1997 (1997-11-01), XP011051787, ISSN: 0018-9197

## Beschreibung

Die vorliegende Erfindung betrifft einen optischen Modulator zum zeitlichen Modulieren elektromagnetischer Wellen, insbesondere der Intensität oder der Polarisation elektromagnetischer Wellen.

Derartige Vorrichtungen dienen auf verschiedenen Gebieten der Technik dazu, elektromagnetische Strahlung, insbesondere Licht, Infrarotstrahlung oder Mikrowellenstrahlung, in einer gewünschten Weise zeitlich zu verändern, also beispielsweise einen Sende- oder Empfangslichtstrahl ein- und auszuschalten. Häufig werden optische Modulatoren periodisch mit einer vorgegebenen Modulationsfrequenz betrieben. Eine periodische Modulation von Sendestrahlen einerseits und Empfangsstrahlen andererseits ist beispielsweise bei Lichtlaufzeitkameras erforderlich. Auf der Empfangsseite von Lichtlaufzeitkameras werden zur Modulation häufig sogenannte Fotomischdetektoren eingesetzt. Diese weisen jedoch nur relativ geringe Modulationsfrequenzen, beispielsweise 40 MHz, auf. Zudem ist die räumliche Auflösung von Fotomischdetektoren vergleichsweise gering, das heißt der Stand der Technik wird von Vorrichtungen mit einer xy-Auflösung im VGA-Format begrenzt. Es wäre daher wünschenswert, bei einer Lichtlaufzeitkamera anstelle eines Fotomischdetektors einen optischen Modulator und einen räumlich auflösenden Detektor beliebiger Art einzusetzen.

Hochfrequente optische Modulatoren sind beispielsweise in Form von Pockels-Zellen und akustooptischen Modulatoren bekannt. Diese sind jedoch aufwändig und kostspielig. Insbesondere für Sensoranwendungen sind solche Modulatoren aufgrund ihrer Komplexität weniger geeignet.

Die EP 1 795 955 A1 offenbart einen optischen Schalter für Projektoren, der ein transparentes Substrat, eine Gitterstruktur sowie eine Schutzschicht umfasst. Seitlich angeordnete Antriebselemente dienen dazu, die Resonanzwellenlänge der Gitterstruktur zu verändern.

Es ist eine Aufgabe der Erfindung, einen einfachen, kostengünstigen und platzsparenden optischen Modulator bereitzustellen, der mit hohen Modulationsfrequenzen betreibbar ist.

Die Lösung der Aufgabe erfolgt durch einen optischen Modulator mit den Merkmalen des Anspruchs 1.

Ein erfindungsgemäßer optischer Modulator umfasst ein Trägerbauteil, eine auf das Trägerbauteil aufgebrachte Wellenleiterschicht, eine Beugungsstruktur, die an einer Oberfläche der Wellenleiterschicht angeordnet ist und gemeinsam mit dieser eine resonante Gitterwellenleiterstruktur bildet, wobei die Beugungsstruktur eine Anordnung von Strukturelementen umfasst, die sich von der Oberfläche der Wellenleiterschicht erstrecken, und wobei sich die Dicke, die Querschnittsform und/oder der Brechungsindex der Strukturelemente entlang einer rechtwinklig zu der Oberfläche verlaufenden Normalenrichtung ändert, und ein Modulationsmittel, das an eine elektronische Steuereinrichtung anschließbar ist und dazu ausgebildet ist, in Abhängigkeit von einem, vorzugsweise periodischen, Steuersignal an dem Trägerbauteil und/oder an der Wellenleiterschicht eine Festkörperwelle zu erzeugen, um die Strukturelemente bezüglich der Normalenrichtung gegeneinander zu verschieben und so die Resonanzwellenlänge der Gitterwellenleiterstruktur zu verändern.

Resonante Gitterwellenleiterstrukturen beruhen auf einer Verknüpfung eines Wellenleiters, beispielsweise in Form einer planaren hochbrechenden Schicht, mit einer dielektrischen Beugungsstruktur und sind beispielsweise in der WO 01/79821 A1 offenbart. Bei der Beugungsstruktur einer Gitterwellenleiterstruktur handelt es sich im Allgemeinen um ein eindimensionales, vorzugsweise regelmäßiges Beugungsgitter. Die Strukturelemente der Beugungsstruktur können aus bezüglich der einfallenden elektromagnetischen Wellen transparentem und brechendem Material bestehen - beispielsweise aus dem gleichen Material, aus welchem die Wellenleiterschicht besteht. Gitterwellenleiterstrukturen weisen ein ausgeprägtes Resonanzverhalten auf. Bei einer bestimmten Wellenlänge - der Resonanzwellenlänge - wird durch auslöschende Interferenz von Teilstrahlen die transmittierte Strahlung vollständig unterdrückt, während der Reflexionsgrad auf 100% ansteigt.

Die Resonanzwellenlänge hängt von verschiedenen Parametern ab, unter anderem vom sogenannten wirksamen Brechungsindex der Beugungsstruktur. Erfindungsgemäß wurde erkannt, dass dieser wirksame Brechungsindex - und damit die Resonanzwellenlänge der Gitterwellenleiterstruktur - durch gegenseitiges Verschieben der Strukturelemente gezielt veränderbar ist, sofern die Strukturelemente jeweils entlang ihrer Erstreckungsrichtung eine brechzahlbezogene Strukturierung aufweisen. Die brechzahlbezogene Strukturierung kann durch eine Dickenänderung, eine Formänderung oder eine Materialänderung gegeben sein. Bei einer gegenseitigen Verschiebung derartiger strukturierter Strukturelemente verändert sich der wirksame Brechungsindex, der sich als "Mischindex" aus dem Brechungsindex des Materials der Strukturelemente und der zwischen den Strukturelementen befindlichen Luft zusammensetzt.

Im Rahmen der Erfindung wurde insbesondere erkannt, dass durch Erzeugen einer Festkörperwelle an dem Trägerbauteil und/oder an der Wellenleiterschicht auf besonders einfache Weise eine gegenseitige Verschiebung der Strukturelemente einer Gitterwellenleiterstruktur und somit eine Veränderung der Resonanzwellenlänge bewerkstelligt werden kann. Durch entsprechendes Ansteuern des zum Erzeugen der Festkörperwelle eingesetzten Modulationsmittels kann somit die Resonanzwellenlänge verschoben werden - beispielsweise in periodischer Weise - wobei das transmittierte und das reflektierte Licht eine dem Steuersignal entsprechende Modulation aufweisen. Grundsätzlich kann ein erfindungsgemäßer optischer Modulator auch als einfacher optischer Schalter betrieben werden. Je nachdem, in welcher Konfiguration der optische Modulator zu betreiben ist, kann das Trägerbauteil reflektierend und/oder transmittierend ausgebildet sein. Im Gegensatz zu Pockels-Zellen und akustooptischen Modulatoren werden keine teuren Materialien und keine komplexen Versorgungs- und Steuereinrichtungen benötigt.

Das Modulationsmittel ist dazu ausgebildet, die Strukturelemente bezüglich der Normalenrichtung gegeneinander zu verschieben, bevorzugt ausschließlich bezüglich der Normalenrichtung. Bei einer Verschiebung bezüglich der Normalenrichtung ändert sich die Höhenlage unterschiedlich brechender Bereiche der Strukturelemente relativ zueinander, woraus eine Änderung des wirksamen Brechungsindex resultiert. Im Falle einer eindimensionalen Beugungsstruktur verläuft die Normalenrichtung quer zur Längserstreckung der einzelnen Strukturelemente.

Weiterbildungen der Erfindung sind in den abhängigen Ansprüchen, der Beschreibung sowie den beigefügten Zeichnungen angegeben.

Bevorzugt ist eine an das Modulationsmittel angeschlossene elektronische Steuereinrichtung vorgesehen, die dazu ausgebildet ist, das Erzeugen der Festkörperwelle mit einer konstanten oder veränderlichen Wiederholfrequenz zu unterbrechen oder zu verändern. Insbesondere kann das Modulationsmittel also dazu ausgebildet sein, die Festkörperwelle lediglich zeitweise zu erzeugen. Alternativ könnten abwechselnd unterschiedliche Festkörperwellen erzeugt werden. Die Modulation kommt letztendlich dadurch zustande, dass die Resonanzwellenlänge der Gitterwellenleiterstruktur zeitweise mit der Wellenlänge der - vorzugsweise monochromatischen - Einfallsstrahlung übereinstimmt und zeitweise von dieser abweicht.

Vorzugsweise ist das Modulationsmittel dazu ausgebildet, entlang der Oberfläche der Wellenleiterschicht eine, insbesondere transversale, Oberflächenwelle zu erzeugen. Dies kann in einfacher Weise durch Ausüben einer Kraft auf das Trägerbauteil und/oder die Wellenleiterschicht erfolgen. Zum Erzeugen einer mechanischen Oberflächenwelle ist nur eine relativ geringe Leistung erforderlich.

Insbesondere kann das Modulationsmittel wenigstens ein Piezoelement aufweisen, das mit dem Trägerbauteil und/oder mit der Wellenleiterschicht in mechanischer Verbindung steht. Piezoelemente sind relativ kostengünstig und in miniaturisierter Form erhältlich. Insbesondere kann das wenigstens eine Piezoelement das Trägerbauteil und/oder die Wellenleiterschicht ausschließlich an einem Randbereich kontaktieren. Somit wird eine übermäßige Erwärmung des Trägerbauteils vermieden. Gemäß einer speziellen Ausgestaltung der Erfindung sind Piezoelemente mit fingerartigen Elektrodenstrukturen, sogenannte Interdigitaltransducer, als Modulationsmittel vorgesehen.

Eine weitere Ausführungsform der Erfindung sieht vor, dass sich die Dicke der Strukturelemente entlang der Normalenrichtung kontinuierlich oder stufenweise ändert. Beispielsweise könnten pyramidenförmige, abgestuft zylinderförmige oder kugelförmige Strukturelemente vorgesehen sein.

Vorzugsweise weisen die Strukturelemente jedoch eine stab- oder leistenförmige Grundform mit wenigstens einer seitlichen Auskragung oder Ausbuchtung auf. Dies ermöglicht eine besonders effektive Variation des wirksamen Brechungsindex der Gitterwellenleiterstruktur. Bei einem eindimensionalen Beugungsgitter ist eine Leistenform bevorzugt, während bei einer zweidimensionalen Beugungsstruktur eine Stabform bevorzugt ist.

Die Strukturelemente können jeweils mehrere bezüglich der Normalenrichtung voneinander beabstandete Auskragungen oder Ausbuchtungen aufweisen. Je nachdem, welche Positionen die Auskragungen oder Ausbuchungen eines Strukturelements bezüglich der Auskragungen oder Ausbuchtungen des benachbarten Strukturelements einnehmen, ergibt sich ein unterschiedlicher Mischindex.

Grundsätzlich kann die Dicke der Strukturelemente auf eine beliebige Weise periodisch strukturiert sein. Solche periodisch strukturierten Strukturelemente sind relativ einfach zu fertigen, beispielsweise mittels gängiger Halbleiter-Prozessierungstechniken.

Vorzugsweise ist die Variation der Dicke der Strukturelemente und/oder die Periode einer Strukturierung der Dicke der Strukturelemente kleiner als die Wellenlänge der zu modulierenden elektromagnetischen Wellen. Insbesondere können die Strukturelemente als sogenannte Nanostrukturelemente ausgeführt sein.

Die Strukturelemente der Anordnung von Strukturelementen können identisch gestaltet sein, um eine besonders einfache Herstellung zu ermöglichen. Bei Bedarf können die Strukturelemente der Anordnung von Strukturelementen jedoch auch in unterschiedlicher Weise brechzahlbezogen strukturiert sein. Außerdem ist es möglich, dass die Beugungsstruktur außer der Anordnung von strukturierten Strukturelementen auch unstrukturierte Strukturelemente umfasst.

Eine spezielle Ausgestaltung der Erfindung sieht vor, dass das Modulationsmittel dazu ausgebildet ist, zum Erzeugen der Festkörperwelle durch eine fortlaufende periodische, insbesondere sinusförmige, Anregung eine erzwungene Schwingung des Trägerbauteils und/oder der Wellenleiterschicht hervorzurufen. Alternativ kann das Modulationsmittel dazu ausgebildet sein, zum Erzeugen der Festkörperwelle durch einen Anregungsimpuls eine freie Schwingung des Trägerbauteils und/oder der Wellenleiterschicht, insbesondere in Eigenresonanz, hervorzurufen.

Vorzugsweise ist ein erfindungsgemäßer optischer Modulator zum zeitlichen Modulieren der Intensität oder der Polarisation von sichtbarem oder infrarotem Licht oder von Mikrowellenstrahlung ausgebildet.

Weiterhin ist es bevorzugt, dass der optische Modulator eine maximale Modulationsfrequenz von wenigstens 50 MHz, bevorzugt von wenigstens 100 MHz und besonders bevorzugt von wenigstens 1 GHz, aufweist. Derartige maximale Modulationsfrequenzen werden von Fotomischdetektoren im Allgemeinen nicht erreicht.

Die Strukturelemente können durch Bearbeitung eines Halbleitersubstrats wie eines Silizium-Substrats, insbesondere mittels Lithografie oder Ätzen, gebildet sein. Derartige Bearbeitungsmethoden sind ausgereift und gut beherrscht.

Die Erfindung betrifft auch einen Strahlungsempfänger mit einem strahlungsempfindlichen optoelektronischen Bauelement, insbesondere einem Bildsensor, und einem optischen Modulator, der an einer Empfangsfläche des strahlungsempfindlichen optoelektronischen Bauelements angeordnet ist.

Erfindungsgemäß ist vorgesehen, dass der optische Modulator wie vorstehend beschrieben gestaltet ist. Je nach Anwendung kann ein solcher Strahlungsempfänger in Reflexion oder in Transmission betrieben werden. Das heißt das strahlungsempfindliche optoelektronische Bauelement kann je nach Anwendung derart angeordnet sein, dass es reflektiertes oder transmittiertes Licht von dem optischen Modulator empfängt. Im Gegensatz zu einem Fotomischdetektor, welcher auf einer inhärenten funktionalen Kopplung von zeitlicher Modulation und räumlicher Auflösung beruht, ermöglicht ein erfindungsgemäßer Strahlungsempfänger die Verwendung eines beliebigen hochauflösenden Bildsensors. Ein erfindungsgemäßer Strahlungsempfänger kann aufgrund der funktionalen Trennung der Modulation von der Ortsauflösung eine hohe Modulationsfrequenz mit einer hohen räumlichen Auflösung vereinen.

Das strahlungsempfindliche optoelektronische Bauelement und der optische Modulator können zu einer Baueinheit integriert sein - in ähnlicher Weise, wie dies bei einem Fotomischdetektor der Fall ist. Alternativ können das strahlungsempfindliche optoelektronische Bauelement und der optische Modulator aber auch als getrennte Komponenten ausgeführt und bei Bedarf voneinander beabstandet angeordnet sein.

Die Erfindung betrifft ferner eine entfernungsempfindliche Kamera, insbesondere eine Lichtlaufzeitkamera, mit einem Strahlungssender zum Aussenden von elektromagnetischen Sendestrahlen in einen Beleuchtungsbereich, einem Strahlungsempfänger zum Empfangen von Empfangsstrahlen, die von einem im Beleuchtungsbereich befindlichen Objekt reflektiert oder zurückgestreut sind, Mitteln zum zeitlichen Modulieren der Intensität oder der Polarisation der Sendestrahlen, einem optischen Modulator zum zeitlichen Modulieren der Intensität oder der Polarisation der Empfangsstrahlen sowie einer elektronischen Verarbeitungseinrichtung, welche dazu ausgebildet ist, aus einem direkten oder indirekten Vergleich der modulierten Sendestrahlen und der modulierten Empfangsstrahlen eine Entfernung von Objektpunkten des Objekts zu ermitteln.

Erfindungsgemäß ist der optische Modulator wie vorstehend beschrieben gestaltet. Aufgrund der hohen maximalen Modulationsfrequenz des optischen Modulators weist eine erfindungsgemäße entfernungsempfindliche Kamera eine besonders hohe Entfernungsauflösung auf.

Lichtlaufzeitkameras oder "Time-of-Flight"-Kameras ermitteln die Phasenverschiebung eines modulierten Strahlungssignals, um daraus die für den Weg von der Strahlungsquelle bis zum Objekt und vom Objekt bis zum Strahlungsempfänger benötigte Laufzeit und somit die Entfernung des Objekts von der Kamera zu ermitteln. Hierfür ist eine exakte phasenstarre Synchronisierung der quellenseitigen Modulation und der empfangsseitigen Modulation notwendig.

Insbesondere kann eine elektronische Steuereinrichtung der Kamera dazu ausgebildet sein, ein Sendestrahlen-Modulationssignal und ein Empfangsstrahlen-Modulationssignal zu überlagern und anhand der Überlagerung die für den Weg vom Strahlungssender zum Strahlungsempfänger benötigte Laufzeit der Strahlen zu ermitteln. Dieses Prinzip der Überlagerung ist auf dem Gebiet der Sensorik grundsätzlich bekannt.

Die Erfindung wird nachfolgend beispielhaft unter Bezugnahme auf die beigefügten Zeichnungen beschrieben.
- Fig. 1: ist eine Prinzipdarstellung einer erfindungsgemäßen Lichtlaufzeitkamera, welche einen Strahlungsempfänger und einen diesem zugeordneten erfindungsgemäßen optischen Modulator umfasst.
- Fig. 2: ist eine vergrößerte seitliche Schnittdarstellung des optischen Modulators gemäß Fig. 1, welcher sich in einem nicht angeregten Grundzustand befindet.
- Fig. 3: zeigt den optischen Modulator gemäß Fig. 2 in einem Anregungszustand.

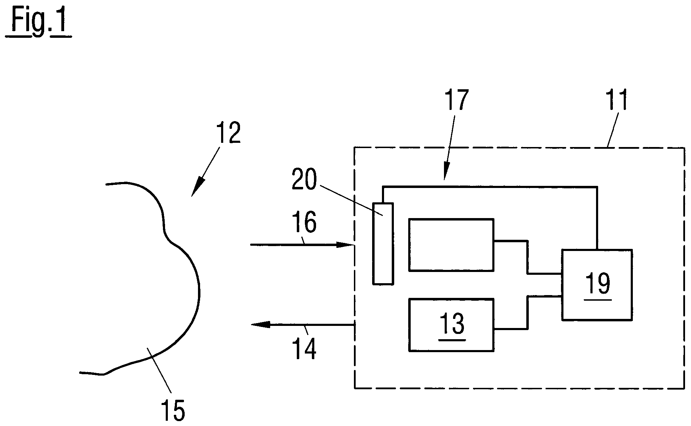

Die in Fig. 1 lediglich schematisch dargestellte Lichtlaufzeitkamera 11 umfasst einen Strahlungssender 13, welcher Sendestrahlen 14 in einen Beleuchtungsbereich 12 aussendet. Beispielsweise kann es sich bei dem Strahlungssender 13 um einen Laser handeln, welcher monochromatisches Licht im sichtbaren Bereich oder im Infrarotbereich aussendet. Alternativ kann der Strahlungssender 13 auch ein Mikrowellensender sein. Ein in dem Beleuchtungsbereich 12 befindliches Objekt 15 bewirkt eine Reflexion und/oder Rückstreuung der Sendestrahlen 14, welche dann als Empfangsstrahlen 16 auf einen Strahlungsempfänger 17 der Lichtlaufzeitkamera 11 auftreffen. Zum Ansteuern des Strahlungssenders 13 und des Strahlungsempfängers 17 sowie zur Auswertung der Empfangssignale umfasst die Lichtlaufzeitkamera 11 eine elektronische Steuereinrichtung 19.

Die Empfangsstrahlen 16 werden mittels eines dem Strahlungsempfänger 17 zugeordneten optischen Modulators 20 zeitlich moduliert. Insbesondere kann eine periodische Modulation mit einer vorgegebenen Modulationsfrequenz vorgesehen sein. Die Sendestrahlen 14 des Strahlungssenders 13 werden ebenfalls moduliert, wahlweise z.B. mittels eines nicht dargestellten zusätzlichen erfindungsgemäßen optischen Modulators oder direkt über die Variation eines Spannungssignals, beispielsweise der Betriebsspannung eines Lasers. Die Modulationssignale der Sendestrahlen 14 und der Empfangsstrahlen 16 werden vorzugsweise phasenstarr synchronisiert. Alternativ können die Modulationssignale der Sendestrahlen 14 und der Empfangsstrahlen 16 periodisch phasenstarr, aber nicht identisch sein. Beispielsweise kann ein Modulationssignal ein amplitudenmoduliertes Sinussignal und das andere Modulationssignal ein frequenzmoduliertes Sweep-Signal sein.

Die elektronische Steuereinrichtung 19 ist dazu ausgebildet, die modulierten Signale, welche den Sendestrahlen 14 und den Empfangsstrahlen 16 entsprechen, zu überlagern und anhand der Überlagerung die für den Weg vom Strahlungssender 13 zum Strahlungsempfänger 17 benötigte Laufzeit der Strahlen zu ermitteln. Dies erfolgt im Speziellen durch eine Messung der Phasenverschiebung zwischen den beiden Modulationssignalen, wie dies auf dem Fachgebiet grundsätzlich bekannt ist.

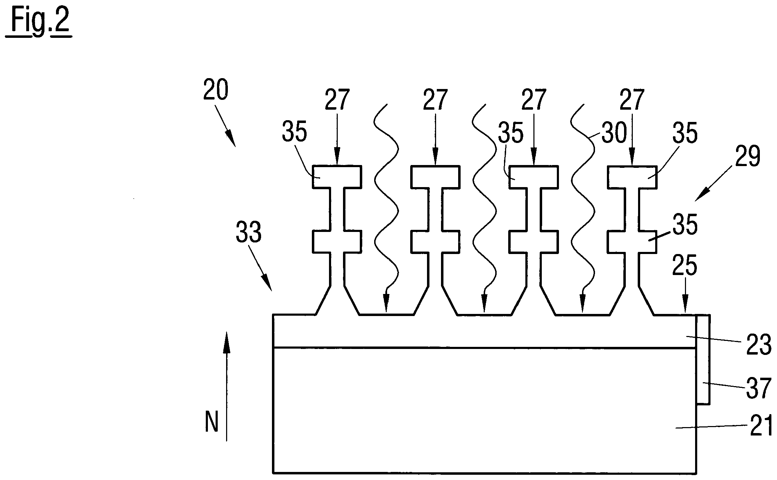

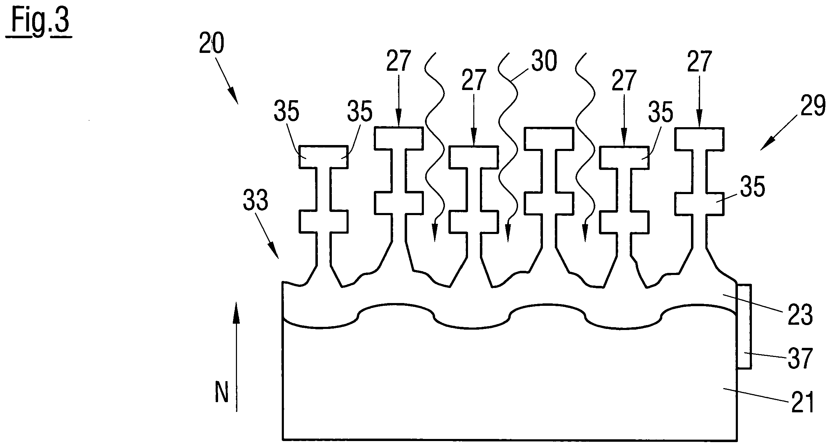

Der in Fig. 2 und 3 detailliert dargestellte optische Modulator 20 umfasst ein Trägerbauteil 21, vorzugsweise in Form eines Halbleiter-Substrats, auf welches eine Wellenleiterschicht 23 aufgebracht ist. Sowohl das Trägerbauteil 21 als auch die Wellenleiterschicht 23 sind hier aus einem bezüglich der einfallenden Strahlung transparenten und brechenden Material gebildet. Die Wellenleiterschicht 23 weist hierbei einen höheren Brechungsindex auf als das Trägerbauteil 21. Von der vom Trägerbauteil 21 weg weisenden Oberfläche 25 der Wellenleiterschicht 23 erstrecken sich mehrere Strukturelemente 27 in einer rechtwinklig zu der Oberfläche 25 verlaufenden Normalenrichtung N. Die Anordnung aus Strukturelementen 27 bildet insgesamt eine Beugungsstruktur 29. Bei dem dargestellten Ausführungsbeispiel sind die Strukturelemente 27 aus dem gleichen Material wie die Wellenleiterschicht 23 gefertigt und weisen somit den gleichen Brechungsindex wie diese auf. Die Strukturelemente 27 sind in gleichem Abstand voneinander angeordnet und hinsichtlich der Formgebung identisch gestaltet, wobei dies jedoch nicht zwingend ist. Die Oberfläche 25 der Wellenleiterschicht 23 bildet die Einfallsfläche für die zu modulierende elektromagnetische Strahlung 30. Die Strukturelemente 27 können durch Bearbeitung eines Halbleitersubstrats, beispielsweise mittels Lithografie oder Ätzen, gebildet sein.

Das Trägerbauteil 21, die Wellenleiterschicht 23 sowie die Beugungsstruktur 29 bilden gemeinsam eine Gitterwellenleiterstruktur 33, die einfallende elektromagnetische Strahlung 30, welche eine vorgegebene Resonanzwellenlänge aufweist, vollständig reflektiert. Wie dargestellt weisen die Strukturelemente 27 eine leistenförmige Grundform mit mehreren seitlichen Auskragungen 35 auf. Die Längsrichtung der sich von der Oberfläche 25 weg erstreckenden leistenförmigen Strukturelemente ist senkrecht zu Figurenebene. Bei der gezeigten Ausführungsform weist jedes Strukturelement 27 zwei bezüglich der Normalenrichtung N voneinander beabstandete seitliche Auskragungen 35 auf. Je nach Anwendung können auch Strukturelemente 27 mit lediglich einer seitlichen Auskragung 35 oder mehr als zwei voneinander beabstandeten seitlichen Auskragungen 35 vorgesehen sein. Weiterhin könnten die seitlichen Auskragungen 35 auch abgerundet sein oder die Strukturelemente 27 könnten auf eine andere Art bezüglich der Normalenrichtung N periodisch strukturiert sein. Die Anzahl, die Position und die Größe der seitlichen Auskragungen 35 bestimmen den wirksamen Brechungsindex der Gitterwellenleiterstruktur 33 und somit deren Resonanzwellenlänge.

Eine in Fig. 2 und 3 lediglich schematisch gezeigte Anordnung von Piezoelementen 37 dient dazu, an der Anordnung aus dem Trägerbauteil 21, der Wellenleiterschicht 23 und den Strukturelementen 27 eine transversale Oberflächenwelle zu erzeugen, wie dies in Fig. 3 gezeigt ist. Grundsätzlich könnte auch eine longitudinale Oberflächenwelle oder eine beliebige andere mechanische Festkörperwelle an der Anordnung aus dem Trägerbauteil 21, der Wellenleiterschicht 23 und den Strukturelementen 27 erzeugt werden. Je nach Anwendung kann die Anordnung von Piezoelementen 37 entweder dazu ausgebildet sein, durch eine fortlaufende periodische Anregung eine erzwungene Schwingung des Trägerbauteils 21 hervorzurufen oder aber durch einen Anregungsimpuls eine freie Schwingung des Trägerbauteils 21 in Eigenresonanz hervorzurufen.

Wie in Fig. 3 erkennbar werden die Strukturelemente 27 durch die transversale Oberflächenwelle bezüglich der Normalenrichtung N gegeneinander verschoben. Durch diese Verschiebung ändert sich auch der wirksame Brechungsindex der Gitterwellenleiterstruktur 33 und somit deren Resonanzwellenlänge. Durch zeitweiliges Verändern der Resonanzwellenlänge der Gitterwellenleiterstruktur 33 kann somit ein einfallendes Strahlenbündel ein- und ausgeschaltet werden. Der zugehörige Detektor kann hierbei je nach Anwendung in Reflexion oder in Transmission angeordnet sein. Die in Fig. 1 dargestellte elektronische Steuereinrichtung 19 ist dazu ausgebildet, das Erzeugen der in Fig. 3 gezeigten Oberflächenwelle mit einer konstanten oder veränderlichen Wiederholfrequenz zu unterbrechen oder zu verändern. Es hat sich gezeigt, dass auf diese Weise ein optischer Modulator 20 mit einer maximalen Modulationsfrequenz von 1 GHz und mehr bereitgestellt werden kann.

In Fig. 1 ist der optische Modulator 20 als von den übrigen Komponenten des Strahlungsempfängers 17 separates Bauteil dargestellt. Der erfindungsgemäße optische Modulator 20 könnte jedoch auch in ein strahlungsempfindliches optoelektronisches Bauelement des Strahlungsempfängers 17, wie zum Beispiel einen Bildsensor, integriert sein. Sowohl bei der getrennten Bauweise als auch bei der integrierten Bauweise ist aber die Modulationsansteuerung unabhängig von der Matrixansteuerung der Bildelemente, so dass gleichzeitig eine hohe Modulationsfrequenz und eine hohe räumliche Auflösung erzielbar sind.

Das Verändern der wirksamen Brechzahl der Gitterwellenleiterstruktur 33 mittels der Oberflächenwelle beruht darauf, dass die Strukturelemente 27 entlang der Normalenrichtung N ein unterschiedliches Brechungsverhalten aufweisen. Es versteht sich, dass ein solches variierendes Brechungsverhalten auch auf andere Weise als durch die seitlichen Auskragungen 35 erzielbar ist. Beispielsweise könnten die Strukturelemente 27 im seitlichen Querschnitt pyramidenförmig oder kugelförmig sein. Auch ist es im Prinzip möglich, bei jedem Strukturelement 27 entlang der Normalenrichtung N Bereiche mit unterschiedlichem Brechungsindex, also zum Beispiel Bereiche mit unterschiedlich brechendem Material, vorzusehen.

Wie erwähnt weisen die Strukturelemente 27 bei dem dargestellten Ausführungsbeispiel eine leistenförmige Grundform auf. Speziell erstrecken sie sich zumindest im Wesentlichen parallel zueinander über das Trägerbauteil 21 und bilden hierdurch ein eindimensionales Beugungsgitter. Fig. 2 und 3 zeigen dementsprechend jeweils einen Schnitt durch die leistenförmigen Strukturelemente 27, wobei sich die Längsachsen der leistenförmigen Strukturelemente 27 jeweils rechtwinklig zur Figurenebene erstrecken. Eine alternative Ausführungsform der Erfindung sieht Strukturelemente mit einer stabförmigen Grundform auf. Diese können insbesondere matrixartig angeordnet sein. Ein Querschnitt durch die Stabachsen einer Reihe solcher matrixartig angeordneter Strukturelemente würde ebenso aussehen wie Fig. 2 und 3.

Gemäß einer nicht dargestellten Ausführungsform der Erfindung wird an der Anordnung aus dem Trägerbauteil 21, der Wellenleiterschicht 23 und den Strukturelementen 27 eine longitudinale Oberflächenwelle anstelle einer transversalen Oberflächenwelle erzeugt. Dies kann durch eine geeignete Positionierung und Ausgestaltung der Anordnung von Piezoelementen 37 bewerkstelligt werden. In diesem Fall werden die Strukturelemente 27 quer zu der Normalenrichtung N gegeneinander verschoben, wodurch sich ebenfalls der wirksame Brechungsindex der Gitterwellenleiterstruktur 33 ändert.

Eine erfindungsgemäße Lichtlaufzeitkamera 11 zeichnet sich durch eine besonders hohe Entfernungsauflösung aus. Es versteht sich, dass ein optischer Modulator 20 wie in Fig. 2 und 3 gezeigt für beliebige Anwendungen geeignet ist, bei welchen es auf eine zeitliche Modulation von Sende- oder Empfangsstrahlung ankommt. Insbesondere könnte der optische Modulator 20 auch im Sendestrahlengang einer Lichtlaufzeitkamera 11 angeordnet sein.

### Bezugszeichenliste

- 11: Lichtlaufzeitkamera
- 12: Beleuchtungsbereich
- 13: Strahlungssender
- 14: Sendestrahlen
- 15: Objekt
- 16: Empfangsstrahlen
- 17: Strahlungsempfänger
- 19: elektronische Steuereinrichtung
- 20: optischer Modulator
- 21: Trägerbauteil
- 23: Wellenleiterschicht
- 25: Oberfläche
- 27: Strukturelement
- 29: Beugungsstruktur
- 30: elektromagnetische Strahlung
- 33: Gitterwellenleiterstruktur
- 35: seitliche Auskragung
- 37: Piezoelement

- N: Normalenrichtung

## Patentansprüche

1. Optischer Modulator (20) zum zeitlichen Modulieren elektromagnetischer Wellen (30), insbesondere der Intensität oder der Polarisation elektromagnetischer Wellen, umfassend:
ein Trägerbauteil (21),
eine auf das Trägerbauteil (21) aufgebrachte Wellenleiterschicht (23),
eine Beugungsstruktur (29), die an einer Oberfläche (25) der Wellenleiterschicht (23) angeordnet ist und gemeinsam mit dieser eine resonante Gitterwellenleiterstruktur (33) bildet,
wobei die Beugungsstruktur (29) eine Anordnung von Strukturelementen (27) umfasst, die sich von der Oberfläche (25) der Wellenleiterschicht (23) erstrecken, und wobei sich die Dicke, die Querschnittsform und/oder der Brechungsindex der Strukturelemente (27) entlang einer rechtwinklig zu der Oberfläche (25) verlaufenden Normalenrichtung (N) ändert, und
ein Modulationsmittel (37), das an eine elektronische Steuereinrichtung (19) anschließbar ist,
**dadurch gekennzeichnet, dass**
das Modulationsmittel (37) dazu ausgebildet ist, in Abhängigkeit von einem, insbesondere periodischen, Steuersignal an dem Trägerbauteil (21) und/oder an der Wellenleiterschicht (23) eine Festkörperwelle zu erzeugen, um die Strukturelemente (27) gegeneinander zu verschieben und so die Resonanzwellenlänge der Gitterwellenleiterstruktur (33) zu verändern, wobei das Modulationsmittel (37) dazu ausgebildet ist, die Strukturelemente (27) bezüglich der Normalenrichtung (N) gegeneinander zu verschieben.

2. Optischer Modulator nach Anspruch 1, wobei das Modulationsmittel (37) dazu ausgebildet ist, die Strukturelemente (27) ausschließlich bezüglich der Normalenrichtung (N) gegeneinander zu verschieben.

3. Optischer Modulator nach Anspruch 1 oder 2, umfassend eine an das Modulationsmittel (37) angeschlossene elektronische Steuereinrichtung (19), die dazu ausgebildet ist, das Erzeugen der Festkörperwelle mit einer konstanten oder veränderlichen Wiederholfrequenz zu unterbrechen oder zu verändern.

4. Optischer Modulator nach einem der vorstehenden Ansprüche, wobei das Modulationsmittel (37) dazu ausgebildet ist, entlang der Oberfläche der Wellenleiterschicht (23) eine, insbesondere transversale, Oberflächenwelle zu erzeugen.

5. Optischer Modulator nach einem der vorstehenden Ansprüche, wobei das Modulationsmittel wenigstens ein Piezoelement (37) aufweist, das mit dem Trägerbauteil (21) und/oder mit der Wellenleiterschicht (23) in mechanischer Verbindung steht.

6. Optischer Modulator nach einem der vorstehenden Ansprüche, wobei sich die Dicke der Strukturelemente (27) entlang der Normalenrichtung (N) kontinuierlich oder stufenweise ändert.

7. Optischer Modulator nach einem der vorstehenden Ansprüche, wobei die Strukturelemente (27) eine stab- oder leistenförmige Grundform mit wenigstens einer seitlichen Auskragung (35) oder Ausbuchtung aufweisen.

8. Optischer Modulator nach Anspruch 7, wobei die Strukturelemente (27) jeweils mehrere bezüglich der Normalenrichtung (N) voneinander beabstandete Auskragungen (35) oder Ausbuchtungen aufweisen.

9. Optischer Modulator nach einem der vorstehenden Ansprüche, wobei die Dicke der Strukturelemente (27) periodisch strukturiert ist.

10. Optischer Modulator nach einem der vorstehenden Ansprüche, wobei die Variation der Dicke der Strukturelemente (27) und/oder die Periode einer Strukturierung der Dicke der Strukturelemente (27) kleiner ist als die Wellenlänge der zu modulierenden elektromagnetischen Wellen (30).

11. Optischer Modulator nach einem der vorstehenden Ansprüche, wobei das Modulationsmittel (37) dazu ausgebildet ist, zum Erzeugen der Festkörperwelle durch eine fortlaufende periodische Anregung eine erzwungene Schwingung des Trägerbauteils (21) und/oder der Wellenleiterschicht (23) hervorzurufen oder dass
das Modulationsmittel (37) dazu ausgebildet ist, zum Erzeugen der Festkörperwelle durch einen Anregungsimpuls eine freie Schwingung des Trägerbauteils (21) und/oder der Wellenleiterschicht (23) hervorzurufen.

12. Optischer Modulator nach einem der vorstehenden Ansprüche, wobei die Strukturelemente (27) durch Bearbeitung eines Halbleitersubstrats, insbesondere mittels Lithografie oder Ätzen, gebildet sind.

13. Strahlungsempfänger (17) mit einem strahlungsempfindlichen optoelektronischen Bauelement, insbesondere einem Bildsensor, und einem optischen Modulator (20), der an einer Empfangsfläche des strahlungsempfindlichen optoelektronischen Bauelements angeordnet ist, wobei der optische Modulator (20) gemäß einem der vorstehenden Ansprüche gestaltet ist.

14. Strahlungsempfänger nach Anspruch 13, wobei das strahlungsempfindliche optoelektronische Bauelement und der optische Modulator (20) zu einer Baueinheit integriert sind.

15. Entfernungsempfindliche Kamera (11), insbesondere Lichtlaufzeitkamera, mit einem Strahlungssender (13) zum Aussenden von elektromagnetischen Sendestrahlen (14) in einen Beleuchtungsbereich (12), einem Strahlungsempfänger (17) zum Empfangen von Empfangsstrahlen (16), die von einem im Beleuchtungsbereich (12) befindlichen Objekt (15) reflektiert oder zurückgestreut sind, Mitteln zum zeitlichen Modulieren der Intensität oder der Polarisation der Sendestrahlen (14), einem optischen Modulator zum zeitlichen Modulieren der Intensität oder der Polarisation der Empfangsstrahlen sowie einer elektronischen Verarbeitungseinrichtung, welche dazu ausgebildet ist, aus einem direkten oder indirekten Vergleich der modulierten Sendestrahlen und der modulierten Empfangsstrahlen eine Entfernung von Objektpunkten des Objekts (15) zu ermitteln, wobei der optische Modulator (20) gemäß einem der Ansprüche 1 bis 12 gestaltet ist.

## Claims

1. An optical modulator (20) for the time modulation of electromagnetic waves (30), in particular of the intensity or of the polarization of electromagnetic waves, comprising:
a carrier component (21);
a waveguide layer (23) applied to the carrier component (21);
a diffraction structure (29) which is arranged at a surface (25) of the waveguide layer (23) and which forms a resonant grating waveguide structure (33) together therewith,
wherein the diffraction structure (29) comprises an arrangement of structural elements (27) which extend from the surface (25) of the waveguide layer (23), and wherein the thickness, the cross-sectional shape and/or the refractive index of the structural elements (27) changes/change along a normal direction (N) extending at a right angle to the surface (25); and
a modulation means (37) which is connectable to an electronic control device (19),
**characterized in that**
the modulation means (37) is configured to generate a solid state wave at the carrier component (21) and/or at the waveguide layer (23) in dependence on a control signal, in particular a periodic control signal, to displace the structural elements (27) with respect to one another and to change the resonance wavelength of the grating waveguide structure (33) in such a manner, with the modulation means (37) being configured to displace the structural elements (27) with respect to one another with regard to the normal direction (N).

2. An optical modulator in accordance with claim 1,
wherein
the modulation means (37) is configured to displace the structural elements (27) with respect to one another only with regard to the normal direction (N).

3. An optical modulator in accordance with claim 1 or claim 2,
comprising
an electronic control device (19) which is connected to the modulation means (37) and which is configured to interrupt or to change the generation of the solid state wave at a constant or variable repetition frequency.

4. An optical modulator in accordance with any one of the preceding claims,
wherein
the modulation means (37) is configured to generate a surface wave, in particular a transverse surface wave, along the surface of the waveguide layer (23).

5. An optical modulator in accordance with any one of the preceding claims,
wherein
the modulation means has at least one piezo element (37) which is in mechanical connection with the carrier component (21) and/or with the waveguide layer (23).

6. An optical modulator in accordance with any one of the preceding claims,
wherein
the thickness of the structural elements (27) varies continuously or stepwise along the normal direction (N).

7. An optical modulator in accordance with any one of the preceding claims,
wherein
the structural elements (27) have a bar-shaped or strip-shaped base shape having at least one lateral projection (35) or bulge.

8. An optical modulator in accordance with claim 7,
wherein
the structural elements (27) each have a plurality of projections (35) or bulges spaced apart from one another with regard to the normal direction (N).

9. An optical modulator in accordance with any one of the preceding claims,
wherein
the thickness of the structural elements (27) is structured periodically.

10. An optical modulator in accordance with any one of the preceding claims,
wherein
the variation of the thickness of the structural elements (27) and/or the period of a structuring of the thickness of the structural elements (27) is/are smaller than the wavelength of the electromagnetic waves (30) to be modulated.

11. An optical modulator in accordance with any one of the preceding claims,
wherein
the modulation means (37) is configured to bring about an enforced oscillation of the carrier component (21) and/or of the waveguide layer (23) by a consecutive periodic excitation in order to generate the solid state wave; or in that
the modulation means (37) is configured to bring about a free oscillation of the carrier component (21) and/or of the waveguide layer (23) by an excitation pulse in order to generate the solid state wave.

12. An optical modulator in accordance with any one of the preceding claims,
wherein
the structural elements (27) are formed by a processing of a semiconductor substrate, in particular by means of lithography or etching.

13. A radiation receiver (17) comprising a radiation-sensitive optoelectronic component, in particular an image sensor, and an optical modulator (20) which is arranged at a reception surface of the radiation-sensitive optoelectronic component,
wherein
the optical modulator (20) is designed in accordance with any one of the preceding claims.

14. A radiation receiver in accordance with claim 13,
wherein
the radiation-sensitive optoelectronic component and the optical modulator (20) are integrated to form an assembly.

15. A distance-sensitive camera (11), in particular a time-of-flight camera, comprising a radiation transmitter (13) for transmitting electromagnetic transmission beams (14) into an illuminated zone; a radiation receiver (17) for receiving reception beams (16) which are reflected or scattered back from an object (15) located in the illuminated zone (12); means for the time modulation of the intensity or of the polarization of the transmission beams (14); an optical modulator for the time modulation of the intensity or of the polarization of the reception beams; and an electronic processing device which is configured to determine a distance from object points of the object (15) based on a direct or indirect comparison of the modulated transmission beams and the modulated reception beams,
wherein
the optical modulator (20) is designed in accordance with any one of the claims 1 to 12.

## Revendications

1. Modulateur optique (20) pour la modulation temporelle d'ondes électromagnétiques (30), en particulier de l'intensité ou de la polarisation d'ondes électromagnétiques, comprenant
un composant porteur (21),
une couche de guide d'ondes (23) appliquée sur le composant porteur (21), une structure de diffraction (29) disposée sur une surface (25) de la couche de guide d'ondes (23) et formant conjointement avec cette dernière une structure réticulaire de guide d'ondes (33) résonnante,
la structure de diffraction (29) comprenant un ensemble d'éléments structurels (27) s'étendant à partir de la surface (25) de la couche de guide d'ondes (23), et l'épaisseur, la forme en section transversale et/ou l'indice de réfraction des éléments structurels (27) se modifiant le long d'une direction normale (N) s'étendant à angle droit par rapport à la surface (25), et un moyen de modulation (37) susceptible d'être connecté à un dispositif de commande électronique (19),
**caractérisé en ce que**
le moyen de modulation (37) est réalisé pour générer une onde de corps solides au niveau du composant porteur (21) et/ou de la couche de guide d'ondes (23) en fonction d'un signal de commande en particulier périodique, afin de translater les éléments structurels (27) les uns par rapport aux autres et de modifier ainsi la longueur d'onde de résonance de la structure réticulaire de guide d'ondes (33), le moyen de modulation (37) étant réalisé pour translater les éléments structurels (27) les uns par rapport aux autres par rapport à la direction normale (N).

2. Modulateur optique selon la revendication 1,
dans lequel
le moyen de modulation (37) est réalisé pour translater les éléments structurels (27) les uns par rapport aux autres exclusivement par rapport à la direction normale (N).

3. Modulateur optique selon la revendication 1 ou 2,
comportant
un dispositif de commande électronique (37) connecté au moyen de modulation (37) et réalisé pour interrompre ou modifier la génération de l'onde de corps solides à une fréquence de récurrence constante ou variable.

4. Modulateur optique selon l'une des revendications précédentes,
dans lequel
le moyen de modulation (37) est réalisé pour générer une onde de surface, en particulier transversale, le long de la surface de la couche de guide d'ondes (23).

5. Modulateur optique selon l'une des revendications précédentes,
dans lequel
le moyen de modulation comporte au moins un élément piézoélectrique (37) qui est en liaison mécanique avec le composant porteur (21) et/ou avec la couche de guide d'ondes (23).

6. Modulateur optique selon l'une des revendications précédentes,
dans lequel
l'épaisseur des éléments structurels (27) le long de la direction normale (N) se modifie en continue ou graduellement.

7. Modulateur optique selon l'une des revendications précédentes,
dans lequel
les éléments structurels (27) présentent une forme de base en forme de tige ou de baguette avec au moins un ergot (35) ou renflement latéral.

8. Modulateur optique selon la revendication 7,
dans lequel
les éléments structurels (27) ont chacun plusieurs ergots (35) ou renflements qui sont espacés les uns des autres par rapport à la direction normale (N).

9. Modulateur optique selon l'une des revendications précédentes,
dans lequel
l'épaisseur des éléments structurels (27) est structurée périodiquement.

10. Modulateur optique selon l'une des revendications précédentes,
dans lequel
la variation de l'épaisseur des éléments structurels (27) et/ou la période d'une structuration de l'épaisseur des éléments structurels (27) est inférieure à la longueur d'onde des ondes électromagnétiques à moduler (30).

11. Modulateur optique selon l'une des revendications précédentes,
dans lequel
le moyen de modulation (37) est réalisé pour provoquer une oscillation forcée du composant porteur (21) et/ou de la couche de guide d'ondes (23) afin de générer l'onde de corps solides par une excitation périodique continue, ou
le moyen de modulation (37) est réalisé pour provoquer une oscillation libre du composant porteur (21) et/ou de la couche de guide d'ondes (23) afin de générer l'onde de corps solides par une impulsion d'excitation.

12. Modulateur optique selon l'une des revendications précédentes,
dans lequel
les éléments structurels (27) sont formés par le traitement d'un substrat semi-conducteur, en particulier par lithographie ou par gravure.

13. Récepteur de rayonnement (17) comprenant un composant optoélectronique sensible au rayonnement, en particulier un capteur d'image, et un modulateur optique (20) qui est disposé sur une surface de réception du composant optoélectronique sensible au rayonnement,
dans lequel
le modulateur optique (20) est conçu selon l'une des revendications précédentes.

14. Récepteur de rayonnement selon la revendication 13,
dans lequel
le composant optoélectronique sensible au rayonnement et le modulateur optique (20) sont intégrés en une unité structurelle.

15. Caméra (11) sensible à la distance, en particulier caméra à temps de vol de lumière, comportant un émetteur de rayonnement (13) pour l'émission de rayons d'émission électromagnétiques (14) dans une zone d'éclairage (12), un récepteur de rayonnement (17) pour la réception de rayons de réception (16) qui sont réfléchis ou rétrodiffusés par un objet (15) se trouvant dans la zone d'éclairage (12), des moyens pour la modulation temporelle de l'intensité ou de la polarisation des rayons d'émission (14), un modulateur optique pour la modulation temporelle de l'intensité ou de la polarisation des rayons de réception, et un dispositif de traitement électronique qui est réalisé pour déterminer une distance de points de l'objet (15) à partir d'une comparaison directe ou indirecte des rayons d'émission modulés et des rayons de réception modulés,
dans laquelle
le modulateur optique (20) est conçu selon l'une des revendications 1 à 12.
